# EUROPÄISCHE PATENTSCHRIFT

(11) **EP 0 776 910 B1**
(45) Veröffentlichungstag und Bekanntmachung des Hinweises auf die Patenterteilung: **19.01.2000**
(21) Anmeldenummer: 96118751.5
(22) Anmeldetag: 22.11.1996
(51) Int. Cl.: C08F 8/30

(54) **Verfahren zur Herstellung eines imidierten Polymerisats von Alkylestern**
Process for the preparation of imidized alkyl ester polymers
Procédé de préparation d'imides de polymères d'esters alkyliques

(30) Priorität: 29.11.1995 DE 19544479
(43) Veröffentlichungstag der Anmeldung: 04.06.1997
(73) Patentinhaber: Röhm GmbH, 64293 Darmstadt (DE)
(72) Erfinder: Albrecht, Klaus, Dr., 55129 Mainz-Hechtsheim (DE); Schikowsky, Hartmut, 64283 Darmstadt (DE); Höss, Werner, 63150 Heusenstamm (DE)

(56) Entgegenhaltungen:
- EP-A- 0 441 148
- EP-A- 0 503 797
- EP-A- 0 524 492
- EP-A- 0 548 657
- EP-A- 0 557 793
- EP-A- 0 581 177
- GB-A- 910 144

## Beschreibung

Die Erfindung betrifft ein vereinfachtes Verfahren zur Herstellung eines imidierten Polymerisats von Alkylestern der Methacrylsäure mit einem Gehalt von Methacrylsäure-Einheiten von weniger als 1 Gew.-% bezogen auf das Polymere.

### Stand der Technik

Die teilweise oder vollständige Imidierung von Polymerisaten von Alkylestern der Methacrylsäure durch die Umsetzung mit einem Imidierungsmittel, z. B. einem primären Amin, ist z. B aus der US 2.146.209 bekannt. Das Polymerisat wird in An- oder Abwesenheit eines Lösungsmittels mit dem Imidierungsmittel gegebenenfalls unter Druck auf Temperaturen von 140 bis 250 ° C erhitzt.

Während es beim Einsatz überschüssigen Imidierungsmittels möglich ist ein vollständig imidiertes Polymerisat zu erhalten, hat es sich bisher als nicht möglich erwiesen, Polymethylmethacrylat durch eine unterschüssige Menge an Imidierungsmittel in ein nur aus Methylmethacrylat- und Methacrylimid-Einheiten aufgebautes Polymerisat umzuwandeln. Man findet in diesem Fall stets auch Einheiten der Methacrylsäure und des Methacrylsäureanhydrids, die durch Nebenreaktionen entstehen (siehe z. B. *G*. *Schröder* (1966) in Makromolekulare Chemie, Band 96, S. 227 - 244). Die Carboxyl- und Anhydridgruppen können unerwünschte Auswirkungen haben, indem sie insbesondere die Witterungsbeständigkeit, die Alkalibeständigkeit und die Mischbarkeit mit anderen thermoplastischen Kunststoffen beeinträchtigen.

Aus EP 216 505 ist bekannt, daß Polymethacrylimide mit anderen thermoplastischen Polymeren unverträglich sind, wenn sie mehr als etwa 0,3 bis 0,4 Milliäquivalente an Carbonsäure- oder Carbonsäureanhydridgruppen enthalten. Dies entspricht einem Gehalt an 2,5 bis 3,5 Gew.-% Methacrylsäure- und/oder Methacrylsäureanhydrid-Einheiten. Solche Einheiten entstehen neben Methacrylsäurealkylimid-Einheiten bei der Umsetzung von Polymethylmethacrylat mit primären Aminen. Bei hohen Imidierungsraten, d. h. wenn 95 % oder mehr der imidierbaren Gruppen des Polymerisats zu Imidgruppen umgesetzt sind, liegt der Gehalt an Carbonsäure- oder Anhydridgruppen in der Regel unter der oben genannten Grenze. Häufig werden jedoch geringere Imidierungsgrade unterhalb von 95 % angestrebt, so daß die vermehrte Bildung der Carbonsäure- oder Anhydridgruppen ein Problem darstellt.

EP 456 267 (US 5.135.985) beschreibt Polymethacrylalkylimide mit weniger als 2,5 Gew.-% Methacrylsäure-Einheiten, die durch homogene Mischung von Polymethacrylalkylimiden mit unterschiedlichen Imidierungsgraden hergestellt werden können. Auch diese Herstellungsweise ist sehr aufwendig, da ständig Polymere mit unterschiedlichem Imidierungsgrad als Rohstoffe für die Herstellung eines Polymethacrylalkylimids bereitgestellt werden müssen.

In EP 441 148 (US 5.110.877) wird ein Verfahren zum Imidieren eines Polymerisats von Alkylestern der Methacrylsäure durch Umsetzung mit einem Imidierungsmittel, bei dem ein Teil des Imidierungsmittels erst zugesetzt wird nachdem das zuvor zugesetzte Imidierungsmittel wenigstens teilweise oder ganz umgesetzt ist, beschrieben. Als geeignete Imidierungsmittel werden Ammoniak oder primäre Amine, wie z. B. Methylamin, genannt. Das Verfahren ermöglicht es Polymethacrylalkylimide mit niedrigen Gehalten an Methacrylsäure-Einheiten von 1,3 bzw. 1,7 Gew.-% bei Imidierungsgraden von ca. 80 % herzustellen. Im Vergleich dazu wird der Gehalt an Methacrylsäure-Einheiten beim nicht erfindungsgemäßen Standardverfahren mit 4,9 Gew.-% angegeben.

Gemäß der Lehre von EP 216 505 wird die Mischbarkeit von Polymethacrylalkylimiden mit anderen thermoplastischen Polymeren verbessert, wenn die Methacrylsäure- und/oder Methacrylsäureanhydrid-Einheiten durch eine Nachbehandlung des Polymeren mit einem Alkylierungsmittel, wie Orthoameisensäureestern, unter Bildung von Methacrylester-Einheiten, umgesetzt werden. Auf diese Weise können beispielsweise Polymethacrylalkylimide mit weniger als 0,1 Milliäquivalenten Säure- und Anhydridgruppen pro g (ca. 0,8 Gew.-%) bei Imidierungsgraden von ca. 60 Gew.-% hergestellt werden. Die Nachalkylierung ist zwar sehr effektiv, sie erfordert jedoch einen zusätzlichen und teuren Verfahrensschritt.

### Aufgabe und Lösung

Der Erfindung liegt die Aufgabe zugrunde ein einfaches Verfahren zur Imidierung von Polymeren aus Alkylestern der Methacrylsäure zu entwickeln, bei dem Polymethacrylalkylimide mit deutlich geringerem Gehalt an Carbonsäure-Einheiten als in der EP 441 148 erhalten werden. Auf einen Nachbehandlungsschritt, wie in der EP 216 505 sollte dabei verzichtet werden.

In der Praxis zeigt sich häufig, daß insbesondere Carbonsäure-Einheiten in Polymethacrylalkylimiden von Nachteil sind. Dagegen halten sich die unerwünschten Auswirkungen vorhandener Carbonsäureanhydridgruppen in tolerierbaren Grenzen. Daher genügt es, in erster Linie ein nahezu von Carbonsäure-Gruppen freies Polymethacrylimid herzustellen.

Die Aufgabe wird gelöst durch ein Verfahren zur Herstellung eines unvollständig imidierten Polymerisats von Alkylestern der Methacrylsäure mit einem Gehalt an Carbonsäureeinheiten von weniger als 1 Gew.-%, bezogen auf das Polymere, durch Imidierung eines Polymerisats von Alkylestern der Methacrylsäure in zwei Verfahrenschritten (a) und (b) dadurch gekennzeichnet, daß im ersten Verfahrensschritt
(a) Ammoniak als Imidierungsmittel eingesetzt wird und nach weitgehender Umsetzung des Ammoniaks im zweiten Verfahrensschritt
(b) Methylamin als Imidierungsmittel eingesetzt wird
wobei das molare Verhältnis des eingesetzten Ammoniaks zum eingesetzten Methylamin 1 : 0,3 bis 1 : 3 beträgt.

Das erfindungsgemäße Verfahren ist einfach ausführbar und liefert Polymethacrylalkylimide mit praxisgerechten Imidierungsgraden, die aufgrund des geringen Gehalts an Methacrylsäure-Einheiten sehr gute Praxiseigenschaften aufweisen. Unerwartet war dabei, daß durch das definierte Verhältnis von Ammoniak und Methylamin in den Verfahrensschritten (a) bzw. (b) Nebenreaktionen, die zum Vorhandensein von Methacrylsäure-Einheiten im Endprodukt führen, offensichtlich ausbleiben. Die erhaltenen Polymere weisen hohe Vicat Erweichungstemperaturen auf und sind gut verarbeitbar.

### Ausführung der Erfindung

Als Ausgangsstoff für die Imidierung verwendet man ein Polymerisat von Alkyestern der Methacrylsäure, das im allgemeinen zu mehr als 50 Gew.-%, vorzugsweise zu mehr als 80 Gew.-%, besonders bevorzugt zu 95 bis 100 Gew.-% aus Einheiten von Alkyestern der Methacrylsäure mit 1 bis 4 Kohlenstoffatomen im Alkylrest besteht. Bevorzugt ist Methylmethacrylat. Bevorzugte Polymerisate sind zu wenigstens 80 Gew.-%, vorzugsweise zu mehr als 90 Gew.-%, besonders bevorzugt zu mehr als 95 Gew.-% aus Methylmethacrylat aufgebaut. Als Comonomere kommen alle mit Methylmethacrylat copolymerisierbaren Monomeren, insbesondere Alkylester der Acrylsäure mit 1 bis 4 Kohlenstoffatomen im Alkylrest, Acryl- oder Methacrylnitril, Acryl- oder Methacrylamid, Styrol oder auch Maleinsäureanhydrid in Betracht. Bevorzugt sind thermoplastisch verarbeitbare Polymerisate dieser Art mit einer reduzierten Viskosität im Bereich von 20 bis 92, vorzugsweise von 50 bis 80 ml/g (gemessen nach ISO 8257, Teil 2). Sie werden im Form eines Pulvers oder Granulats mit einer mittleren Teilchengröße von ca. 0,03 bis 3 mm eingesetzt. Ebenso können sie als Schmelze aus einem vorgeschalteten kontinuierlichen Polymerisationsverfahren eingetragen werden.

Wesentlich für das erfindungsgemäße Verfahren ist, daß in einem Verfahrensschritt (a) zunächst Ammoniak als Imidierungsmittel verwendet wird, in einem darauffolgenden Verfahrensschritt (b) Methylamin eingesetzt wird und das molare Verhältnis von eingesetztem Ammoniak zum eingesetzten Methylamin 1 : 0,3 bis 1 : 3, vorzugsweise 1 : 0,8 bis 1 : 2,7, besonders bevorzugt 1 : 0,9 bis 1 : 1,1 beträgt. Unterhalb dieses Bereiches können verstärkt Trübungen des erhaltenen Polymethacrylimids auftreten. Bei einem molaren Überschuß von Methylamin bezogen auf den eingesetzten Ammoniak steigt wiederum der Anteil der Carbonsäuregruppen im Polymeren in unerwünschter Weise an.

Das Verfahren der Erfindung kann kontinuierlich oder diskontinuierlich durchgeführt werden. Im letztgenannten Fall wird der Ammoniak zu Beginn der Umsetzung im Verfahrensschritt (a) zugegeben und das Methylamin allmählich oder in einem oder mehreren Teilen nach Umsetzung des Ammoniaks im Verfahrensschritt (b) zugesetzt. Beispielweise kann das Imidierungsmittel mit einer Druckpumpe gleichmäßig oder in periodischen Anteilen in den auf Reaktionstemperatur erhitzten Reaktor eingepreßt werden. Gegebenenfalls wird jeweils vor dem Zusatz eines weiteren Teils des Imidierungsmittels die im Reaktor angesammelte Gasphase entspannt, wodurch die bis dahin gebildeten flüchtigen Reaktionsprodukte aus dem Reaktionsgemisch entfernt werden.

Bei kontinuierlicher Arbeitsweise wird die Imidierung zweckmäßig in einem Rohrreaktor durchgeführt und das Polymerisat und das Imidierungsmittel werden kontinuierlich in den Rohrreaktor eingeleitet. An einer ersten Einlaßöffnung wird der erste Teil des Imidierungsmittels, der Ammoniak, eingeleitet und mit dem schmelzflüssigen Polymerisat vermischt. Weitere Anteile des Imidierungsmittels können an einer oder mehreren Stellen in den Rohrreaktor eingeführt werden, an denen das zuvor eingeleitete Imidierungsmittel teilweise oder ganz umgesetzt ist. Als Rohrreaktor wird vorzugsweise ein Ein- oder ein Mehrschneckenextruder verwendet. Auch hier können Druck- und Entgasungszonen miteinander abwechseln, um aus dem im Extruder allmählich weiterbewegten Reaktionsgemisch jeweils vor dem Zusatz weiteren Imidierungsmittels die bis dahin gebildeten flüchtigen Reaktionsprodukte zu entfernen. Weiterhin können auch statische Mischer als Reaktoren verwendet werden.

Beispielweise kann 1 Grundmol Polymethylmethacrylat (die Bezeichnung "Grundmol" bezieht sich auf die den polymerisierten Estereinheiten zugrundeliegende Menge des Estermonomeren) im Verfahrensschritt (a) mit 0,1 bis 1 Mol Ammoniak umgesetzt werden. Gute Resultate werden z. B. mit 0,2 bis 0,8 Mol Ammoniak erhalten, besonders bevorzugt sind 0,4 bis 0,6 Mol. Der Ammoniak kann vorzugweise in einer bis fünf Zugabemengen zugesetzt werden. Nach weitgehender Umsetzung des Ammoniaks erfolgt dann im Verfahrensschritt (b) die Zugabe von Methylamin in einem molaren Verhältnis von 0,3 bis 3, vorzugsweise von 0,8 bis 2,7, besonders bevorzugt von 0,9 bis 1,1 jeweils bezogen auf die insgesamt eingesetzte Menge des Ammoniaks. Die Zugabe des Methylamins kann in analoger Weise, bevorzugt in ein bis fünf Zugabemengen erfolgen.

Vorzugsweise wird die Umsetzung mit dem Imidierungsmittel abgebrochen bevor das Polymerisat vollständig imidiert ist. Zu diesem Zweck können die Imidierungsmittel in einer Gesamtmenge von z. B. 0,2 bis 2,5, vorzugsweise von 0,5 - 1,5, besonders bevorzugt von 0,8 - 1,2 Mol pro Grundmol der Estereinheiten eingesetzt werden. Es ist jedoch stets das festgelegte Mengenverhältnis von Ammoniak zu Methylamin einzuhalten. Man erhält dann Polymerisate, die zu etwa 20 bis 80 Grundmol-% aus cyclischen Methacrylimideinheiten aufgebaut sind und nur äußerst geringe Mengen, unter 1 Gew.-%, an Methacrylsäure-Einheiten aufweisen.

Das Imidierungsverfahren kann weitgehend in an sich bekannter Weise, z. B. wie in EP 441 148 beschrieben, ausgeführt werden. Die Imidierung läuft am besten bei Temperaturen oberhalb der Schmelztemperatur bzw. mindestens 20 ° C oberhalb der Vicat-B-Erweichungstemperatur nach ISO 306 des Ausgangspolymeren ab. Noch besser wird eine Umsetzungstemperatur gewählt, die mindestens 20 ° C oberhalb der Erweichungstemperatur des entstehenden imidierten Polymerisats liegt. Da die Vicat-Erweichungstemperatur des imidierten Polymeren in der Regel die Zielgröße des Verfahrens ist und der zu erreichende Imidierungsgrad danach festgelegt wird, ist es ebenso leicht möglich, die erforderliche Mindest-Temperatur zu bestimmen. Bevorzugt ist ein Temperaturbereich von 140 bis 300, insbesondere von 150 bis 260 ° C, besonders bevorzugt von 200 - 250 ° C. Um das Polymerisat nicht mehr als nötig thermisch zu belasten, kann z. B. die Umsetzungstemperatur ausgehend von einer Temperatur dicht über der Schmelztemperatur des Ausgangspolymeren, allmählich bzw. stufenweise gesteigert werden und erst zuletzt die Erweichungstemperatur des imidierten Endprodukts um wenigstens 20 ° C überschreiten. Innerhalb der Umsetzungsstufen wird vorzugsweise mit konstantem Druck, der bei 50 bis 500 bar liegen kann, gearbeitet. Zwischen den einzelnen Verfahrensstufen kann, z. B. zur Entgasung, entspannt werden. Dabei kann die Temperatur des Reaktionsgemisches sinken und muß danach wieder auf den erforderlichen Wert erhöht werden. Wird Imidierungsmittel unter Umsetzungsbedingungen zugeführt, so muß dafür natürlich ein entsprechend hoher Druck angewendet werden.

Die Umsetzungsdauer richtet sich nach der Reaktionsgeschwindigkeit unter den angewandten Bedingungen. Sie kann deutlich kürzer sein als die Reaktionszeit, die zu einer vollständigen Imidierung benötigt würde, soll aber jedenfalls ausreichen, um eine teilweise, z. B. 20 - 80 %-ige vorzugsweise 30 - 60 %-ige Imidierung des Polymeren zu gewährleisten. Im allgemeinen sind dafür 10 sec bis 30 min, vorzugsweise 1 bis 7 min, pro Verfahrensstufe ausreichend. Als Richtwert können 4 - 6 min gelten.

Die Umsetzung kann gewünschtenfalls in einer oder in beiden Verfahrensstufen in Anwesenheit von Lösungs- oder Verdünnungsmitteln durchgeführt werden, wie beispielsweise aus US 2 146 209, DE 1 077 872, DE 1 088 231 oder EP 234 726 bekannt. Geeignete Lösungsmittel sind vor allem solche, die bei Raumtemperatur flüssig und bei erhöhter Temperatur, gegebenenfalls bei Unterdruck flüchtig sind und sich von dem imidierten Polymerisat leicht abtrennen lassen. Sie können entweder für das Ausgangspolymerisat oder für das imidierte Polymerisat oder für beide Lösungsmittel sein, gegebenenfalls nur unter Umsetzungsbedingungen, jedoch ist dies nicht grundsätzlich notwendig. Zu den verwendbaren Lösungs- und Verdünnungsmitteln zählen Mineralöle, Benzinkohlenwasserstoffe, Aromaten, Alkanole, z. B. Methanol, Ether, Ketone, Ester, Halogen-Kohlenwasserstoffe, sowie auch Wasser.

Nach der letzten Umsetzungsstufe wird entspannt und das imidierte Polymerisat abgekühlt. Dabei können das ggf. mitverwendete Lösungs- bzw. Verdünnungsmittel zusammen mit überschüssigem Imidierungsmittel und abgespaltenem Alkanol von dem imidiertem Polymerisat abgetrennt werden. Diese Verfahrensstufe gestaltet sich besonders vorteilhaft, wenn das Verfahren zumindest in der letzten Stufe in einem Rohrreaktor, insbesondere einem Extruder durchgeführt wird. Die vom Polymerisat abzutrennenden Stoffe können in flüssiger Form oder in Dampfform vor dem Ende des Rohrreaktors an einer oder mehreren Stellen abgenommen werden, wo das Polymerisat noch im Schmelzezustand vorliegt. Dabei kann der erste Anteil dieser Stoffe unter dem vollen Reaktionsdruck und die letzten Reste aus einer Entspannungszone im Unterdruck abgenommen werden. Dafür können an sich bekannte ein- oder mehrstufige Entgasungsextruder eingesetzt werden. Gegebenenfalls kann auch das ganze Reaktionsgemisch aus dem Rohrreaktor ausgetragen werden, entspannt, gekühlt und zerkleinert und erst danach von den Nebenbestandteilen getrennt werden. Zu diesem Zweck kann das erkaltete und zerkleinerte Polymerisat mit einem geeigneten Lösungsmittel oder mit Wasser gewaschen werden.
Das so erhaltene imidierte Produkt kann in an sich bekannter Weise, z. B. thermoplastisch, verarbeitet werden. Aufgrund des extrem niedrigen Gehalts an Methacrylsäure-Gruppen im Polymerisat, zeichnet es sich durch eine gute Mischbarkeit und Verträglichkeit mit anderen Polymerisaten aus. Die Witterungsbeständigkeit ist ebenfalls sehr gut, da die Wasseraufnahme bei Feuchtigkeit deutlich reduziert ist. Hierbei spielt der im Vergleich zu den Carboxyl-Gruppen höhere Anteil an Anhydridgruppen eine nur unwesentliche Rolle. Dies könnte z. B. darauf zurückzuführen sein, daß die Anhydridgruppen im Innern des Polymermoleküls relativ gut vor hydrolytischer Einwirkung durch Feuchtigkeit geschützt sind. Das erfindungsgemäße Verfahren gestattet es in zwei einfach durchzuführenden Verfahrensschritten ein für praktische Anwendung hochwertiges Polymethacrylalkylimid zu erhalten.

Insbesondere können erhalten werden :
- ein Polymethacrylalkylimid-Polymer mit einem Imidierungsgrad von 20 bis 80 Gew.-% und einem Säureanhydridgehalt von mehr als 4 Gew.-%, dadurch gekennzeichnet, daß der Anteil der Methacrylsäure-Gruppen weniger als 1 Gew.-% beträgt.
- ein Polymethacrylalkylimid-Polymer mit einem Imidierungsgrad von 20 bis 40 Gew.-% und einem Säureanhydridgehalt von mehr als 10 Gew.-%, dadurch gekennzeichnet, daß der Anteil der Methacrylsäure-Einheiten weniger als 0,1 Gew.-% beträgt.
- ein Polymethacrylalkylimid-Polymer mit einem Imidierungsgrad von 40 bis 70 Gew.-% und einem Säureanhydridgehalt von mehr als 4 Gew.-%, dadurch gekennzeichnet, daß der Anteil der Methacrylsäure-Einheiten weniger als 1 Gew.-% beträgt.

### BEISPIELE

### Beispiel 1 (Vergleichsbeispiel):

Auf einer Reaktionsextrusionsanlage, bestehend aus einem Reaktionsextruder mit nachgeschaltetem Druckhalteventil, einem Entgasungsextruder mit 2 Entgasungsöffnungen und angeschlossenen Vakuumleitungen wurden die Polymerreaktionen durchgeführt. Der Reaktionsextruder hat einen Schneckendurchmesser von D = 45 mm und enthält ein hochwirksames Mischteil zur homogenen Vermischung der Reaktionskomponenten.

Je Stunde werden 10 kg einer PMMA-Formmasse eingebracht. Zu Beginn des Mischteils werden in die 250 °C heiße Polymerschmelze bei einem Druck von 260 bar 2000 g/h Methylamin eingebracht. Das Reaktionsgemisch wird über das Druck-halteventil entspannt und in den Entgasungsextruder eingeführt.

Der Entgasungsextruder besitzt einen Schneckendurchmesser von D = 30 mm bei einer Länge von 30 D. Die am Ende des Entgasungsextruders ausgetragene Formmasse ist glasklar.

Durch NMR-Analyse wurde ein Gehalt von 70 Gew.-% Dimethacryl-N-Methylimideinheiten festgestellt. Durch Titration mit KOH wurden 4,8 Gew.-% Methacrylsäure-Einheiten festgestellt; durch Hydrolyse des Produktes und erneute Titration konnte 5 Gew.-% Säureanhydrideinheiten gefunden werden.

### Beispiel 2 (Erfindungsgemäß):

Das Verfahren gemäß Beispiel 1 wird dahingehend modifiziert, daß im Reaktionsextruder eine zweite Dosierstelle im Bereich des Mischers angebracht wird. In die erste Dosierstelle wurde nun Ammoniak in einer Menge von 436 g/h eindosiert. Anschließend wurde in die zweite Dosierstelle Methylamin in einer Menge von 796 g/h zudosiert. Dies entspricht einem molaren Verhältnis von Ammoniak zu Methylamin von 1 : 1. Nach weiterer Verfahrensweise gemäß Beispiel 1 wurde ein Produkt erhalten mit 30 Gew.-% Dimethacryl-N-Methylimideinheiten, einen nicht nachweisbaren Anteil von Methacrylsäure-Einheiten (Nachweisgrenze < 0,01 Gew.-%) und Säureanhydrid-Einheiten von 11,9 Gew.-%.

### Beispiel 3 (Erfindungsgemäß)

Bei gleicher Verfahrensweise wie im Beispiel 2 wird in der ersten Dosierstelle 250 g/h Ammoniak zudosiert und anschließend in der zweiten Dosierstelle eine Menge von 1 100 g/h Methylamin. Dies entspricht einem molaren Verhältnis von 1 : 2,5. Das Produkt zeigt einen Imidgehalt von 59,1 Gew.-%, Dimethacryl-N-Methylimid, einen Gehalt von 0,8 Gew.-% Methacrylsäure- sowie 4,8 Gew.- % Säureanhydrid-Einheiten.

### Beispiel 4 (Erfindungsgemäß)

Auf einer Reaktionsanlage, bestehend aus Reaktionsextruder 1 und Reaktionsextruder 2 in der Ausführung gemäß Beispiel 1 wird bei einem Massedurchsatz von 10 kg pro Stunde einer PLEXIGLAS® 8H-Formmasse (Copolymerisat aus 99 Gew.-% Methylmethacrylat- und 1 Gew.-% Methylacrylat-Einheiten mit einem mittleren Molekulargewicht von ca. 1,5 x 10⁵) in Extruder 1 eine Menge von 550 g pro h Ammoniak eingepreßt. Nach einer Reaktionszeit (mittlere Verweilzeit) von 5 min wird die Reaktionsmischung über ein Entspannungsventil in einen Entgasungsextruder entspannt und über zwei Entgasungszonen flüchtige, gasförmige Anteile entfernt. Über eine beheizte Rohrleitung wird die heiße Schmelze in den Extruder 2 geführt. In Extruder 2 wird in das Mischteil eine Menge von 500 g pro h Methylamin zugegeben und zur Reaktion gebracht (Dies entspricht einem molaren Verhältnis von Ammoniak zu Methyamin von etwa 1 : 0,5). Nach Überleitung an den nachgeschalteten Entgasungsextruder wird nach nochmaliger Entgasung die Schmelze als Strang abgezogen, gekühlt und zu Granulat geschnitten. Das erhaltene Granulat ist farblos und glasklar.

Aus dem Granulat wurden Probekörper 80 x 10 x 4 spritzgegossen und die Vicaterweichungstemperatur nach ISO 306, Verfahren B, mit 160°C bestimmt. Die Analyse des Produktes ergab einen Gehalt von 7,9 Gew. % Säureanhydrid bei einem Imidgehalt von 57 Gew.- %. Der analytische Gehalt an Methacrylsäure-Einheiten lag unterhalb der Nachweisgrenze (< 0,01 Gew.-%).

## Patentansprüche

1. Verfahren zur Herstellung eines unvollständig imidierten Polymerisats von Alkylestern der Methacrylsäure mit einem Gehalt an Carbonsäureeinheiten von weniger als 1 Gew.-%, bezogen auf das Polymere, durch Imidierung eines Polymerisats von Alkylestern der Methacrylsäure in zwei Verfahrenschritten (a) und (b), dadurch gekennzeichnet, daß im ersten Verfahrensschritt
(a) Ammoniak als Imidierungsmittel eingesetzt wird und nach weitgehender Umsetzung des Ammoniaks im zweiten Verfahrensschritt
(b) Methylamin als Imidierungsmittel eingesetzt wird
wobei das molare Verhältnis des eingesetzten Ammoniaks zu eingesetztem Methylamin 1 : 0,3 bis 1 : 3 beträgt.

2. Verfahren nach Anspruch 1, dadurch gekennzeichnet, daß das Verhältnis des eingesetzten Ammoniaks zu eingesetztem Methylamin 1 : 0,8 bis 1 : 2,7 beträgt.

3. Verfahren nach Anspruch 1, dadurch gekennzeichnet, daß das Verhältnis des eingesetzten Ammoniaks zu eingesetztem Methylamin 1 : 0,9 bis 1 : 1,1 beträgt.

4. Verfahren nach einem oder mehreren der Ansprüche 1 bis 3, dadurch gekennzeichnet, daß es in einem Extruder durchgeführt wird.

5. Polymethacrylalkylimid-Polymer mit einem Imidierungsgrad von 20 bis 80 Gew.-% und einem Säureanhydridgehalt von mehr als 4 Gew.-%, dadurch gekennzeichnet, daß der Anteil der Methacrylsäure-Gruppen weniger als 1 Gew.-% beträgt.

6. Polymethacrylalkylimid-Polymer mit einem Imidierungsgrad von 20 bis 40 Gew.-% und einem Säureanhydridgehalt von mehr als 10 Gew.-%, dadurch gekennzeichnet, daß der Anteil der Methacrylsäure-Einheiten weniger als 0,1 Gew.-% beträgt.

7. Polymethacrylalkylimid-Polymer mit einem Imidierungsgrad von 40 bis 70 Gew.-% und einem Säureanhydridgehalt von mehr als 4 Gew.-%, dadurch gekennzeichnet, daß der Anteil der Methacrylsäure-Einheiten weniger als 1 Gew.-% beträgt.

## Claims

1. A process for the preparation of an incompletely imidised polymerisate of alkyl esters of methacrylic acid with a carbonic acid unit content of less than 1% by weight, based on the polymer, by imidisation of a polymerisate of alkyl esters of the methacrylic acid in two process steps (a) and (b), characterised in that in the first process step
(a) ammonia is used as an imidisation agent
and, after extensive reaction of the ammonia, in the second process step
(b) methylamine is used as an imidisation agent
wherein the molar ratio of the utilised ammonia to the utilised methylamine is 1:0.3 to 1:3.

2. A process according to claim 1, characterised in that the ratio of the utilised ammonia to the utilised methylamine is 1:0.8 to 1:2.7.

3. A process according to claim 1, characterised in that the ratio of the utilised ammonia to the utilised methylamine is 1:0.9 to 1:1.1.

4. A process according to one or more of claims 1 to 3, characterised in that it is carried out in an extruder.

5. Polymethacrylalkylimide polymers with a degree of imidisation from 20 to 80% by weight and an acid anhydride content of greater than 4% by weight, characterised in that the proportion of methacrylic acid units is less than 1% by weight.

6. Polymethacrylalkylimide polymers with a degree of imidisation from 20 to 40% by weight and an acid anhydride content of greater than 10% by weight, characterised in that the proportion of methacrylic acid units is less than 0.1% by weight.

7. Polymethacrylalkylimide polymers with a degree of imidisation from 40 to 70% by weight and an acid anhydride content of greater than 4% by weight, characterised in that the proportion of methacrylic acid units is less than 1% by weight.

## Revendications

1. Procédé de fabrication d'un polymère incomplètement imidé d'esters acryliques de l'acide méthacrylique ayant une teneur en unités acide carboxylique inférieure à 1 % en poids, par rapport au polymère, par imidation d'un polymère d'esters alkyliques de l'acide méthacrylique en deux étapes opératoires (a) et (b),
caractérisé en ce que
dans la première étape opératoire,
(a) on utilise l'ammoniac comme agent d'imidation et, après avoir largement fait réagir l'ammoniac, dans une seconde étape opératoire,
(b) on utilise la méthylamine comme agent d'imidation le rapport molaire de l'ammoniac utilisé à la méthylamine utilisée s'élevant à 1:0,3 à 1:3.

2. Procédé selon la revendication 1,
caractérisé en ce que
le rapport de l'ammoniac utilisé à la méthylamine utilisée s'élève à 1:0,8 à 1:2,7.

3. Procédé selon la revendication 1,
caractérisé en ce que
le rapport de l'ammoniac utilisé à la méthylamine utilisée s'élève à 1:0,9 à 1:1,1.

4. Procédé selon une ou plusieurs des revendications 1 à 3,
caractérisé en ce qu'
il est réalisé dans une extrudeuse.

5. Polymère de polyméthacrylalkylimide ayant un degré d'imidation de 20 à 80 % en poids et une teneur en anhydride d'acide supérieure à 4 % en poids,
caractérisé en ce que
la proportion des groupes méthacryliques est inférieure à 1 % en poids.

6. Polymère de polyméthacrylalkylimide ayant un degré d'imidation de 20 à 40 % en poids et une teneur en anhydride d'acide supérieure à 10 % en poids,
caractérisé en ce que
la proportion des unités méthacryliques est inférieure à 0,1 % en poids.

7. Polymère de polyméthacrylalkylimide ayant un degré d'imidation de 40 à 70 % en poids et une teneur en anhydride d'acide supérieure à 4 % en poids,
caractérisé en ce que
la proportion des unités méthacryliques est inférieure à 1 % en poids.
